# EUROPÄISCHE PATENTSCHRIFT

(11) **EP 2 507 664 B1**
(45) Veröffentlichungstag und Bekanntmachung des Hinweises auf die Patenterteilung: **01.02.2017**
(21) Anmeldenummer: 10772983.2
(22) Anmeldetag: 23.10.2010
(51) Int. Cl.: G02B 5/30, G03B 21/00, G02B 27/01

(54) **PROJEKTIONSEINHEIT FÜR EIN HEAD-UP-DISPLAY UND VERFAHREN ZUM BETREIBEN EINER PROJEKTIONSEINHEIT FÜR EIN HEAD-UP-DISPLAY**
PROJECTION UNIT FOR A HEAD-UP DISPLAY AND METHOD FOR OPERATING A PROJECTION UNIT FOR A HEAD-UP DISPLAY
UNITÉ DE PROJECTION POUR UN AFFICHAGE TÊTE HAUTE ET PROCÉDÉ DE FONCTIONNEMENT D'UNE UNITÉ DE PROJECTION POUR UN AFFICHAGE TÊTE HAUTE

(30) Priorität: 04.12.2009 DE 102009057033
(43) Veröffentlichungstag der Anmeldung: 10.10.2012
(73) Patentinhaber: Bayerische Motoren Werke Aktiengesellschaft, 80809 München (DE)
(72) Erfinder: LINKE, Felix, 82515 Wolfratshausen (DE); WAGNER-GENTNER, Armin, 80999 München (DE); GUNNAR, Franz, 85521 Ottobrunn (DE)
(74) Vertreter: Mayer-Martin, Christian
(86) Internationale Anmeldenummer: PCT/EP2010/006488
(87) Internationale Veröffentlichungsnummer: WO 2011/066890

(56) Entgegenhaltungen:
- WO-A1-00/65844
- WO-A2-03/046326
- US-A- 3 544 195
- US-A- 5 486 840
- US-A- 5 859 714
- US-A1- 2003 147 145
- US-B1- 6 262 841
- US-E- R E27 356

## Beschreibung

Die Erfindung betrifft eine Projektionseinheit für ein Head-Up-Display, aufweisend eine Beleuchtungseinheit, ein der Beleuchtungseinheit nachgeschaltetes optisches Element und eine dem optischen Element nachgeschaltete bildgebende Einheit. Die Erfindung betrifft ferner ein Verfahren zum Betreiben einer Projektionseinheit für ein Head-Up-Display.

Es sind Head-Up-Displays bekannt, deren Projektionseinheit als eine bildgebende Einheit bzw. zur Bildanzeige ein TFT-Display mit einer entsprechenden Hinterleuchtungseinheit verwendet. Dabei sind Head-Up-Displays bekannt, welche in dem Strahlengang als ein letztes Element vor dem TFT-Display eine Linse und damit eine teilspiegelnde Oberfläche aufweisen können.

So zeigt JP 2007108429 A2 eine Head-Up-Anzeigevorrichtung für ein damit ausgestattetes Fahrzeug. Um eine Leuchtstärkeinhomogenitäten eines Beleuchtungslichts, das durch eine Anzeigeeinheit läuft, zu verringern, während die Reduktion in der Leuchtstärke in einer mit der Anzeigeeinheit ausgestatteten Anzeigevorrichtung verhindert wird, wird eine Lichtquelle zum durchlässigen Beleuchten derselben sowie eine Diffusorplatte zum durchlässigen Beleuchten der Anzeigeeinheit mittels Vereinheitlichens des Lichts von der Lichtquelle bereitgestellt. Dazu ist die Anzeigevorrichtung mit der Anzeigeeinheit ausgestattet, welche eine gewünschte Information anzeigt, indem sie durchlässig beleuchtet wird, mit der Lichtquelle, welche hinter der Anzeigeeinheit angeordnet ist und die Anzeigeeinheit durchlässig beleuchtet, mit der Diffusorplatte, welche das von der Lichtquelle emittierte Licht homogenisiert, und mit einer ersten Kondensorlinse, welche das von der Diffusorplatte homogenisierte Licht zu der Anzeigeeinheit hin verdichtet, um die Anzeigeeinheit durchlässig zu beleuchten. Als ein Ergebnis kann die Leuchtstärkeinhomogenität mittels der Diffusorplatte verringert werden, während die Reduktion in der Leuchtstärke der Anzeigevorrichtung verhindert wird.

Ferner zeigt JP 2008068766 A2 eine Fahrzeuganzeigevorrichtung. Um eine Fahrzeuganzeigevorrichtung, welche miniaturisiert sein kann, bereitzustellen, weist eine Projektionslinse in einem Head-Up-Display als eine Fahrzeuganzeigevorrichtung eine Projektionslinsenoberfläche auf, welche in Richtung einer Flüssigkristallpanelseite projiziert, wobei eine optische Achse eine Hinterleuchtungseinheit mit dem Flüssigkristallpanel als eine Mittelachse verbindet, sowie eine Reflexionsoberfläche, welche näher an der Hinterleuchtungssseite von der Projektionslinsenoberfläche aus bereitgestellt ist und bezüglich der optischen Achse geneigt ist, um von der optischen Achse in Richtung der Projektionslinsenoberflächenseite von der Rückleuchtenseite getrennt zu sein, um das einfallende Licht von der Rückleuchte zu der Projektionslinsenoberflächenseite zu reflektieren.

Unter bestimmten Sonnenständen fällt Sonnenlicht in die Projektionseinheit ein, und damit auch auf das TFT-Display. An den Stellen, an denen das TFT-Display aufgrund des Anzeigeinhaltes transparent geschaltet ist, tritt dieses Sonnenlicht mit der displaytypischen Transmission durch das TFT-Display hindurch (wobei eine Abschwächung von ca. 95,3% auftritt) und wird von der Oberfläche der Linse wieder in Richtung das TFT-Displays reflektiert. Aufgrund der enormen Helligkeit der Sonne besitzt dieses reflektierte Licht trotz starker Abschwächung durch die TFT-Transmissivität und lediglich teilweiser Reflexion an der Oberfläche der Linse eine ausreichende Helligkeit, um für den Fahrer ein zweites, deutlich sichtbares und verschobenes Bild ("Nebenbild") zu erzeugen.

US 5,859,714 offenbart, dass ein durch Belichtung hergestelltes Hologramm als ein Kombinierer verwendet wird, wobei eine Kombination einer zentralen Wellenlänge, einer Halbwertsbreite und eines Beugungswirkungsgrad des Beugungslichtspektrums eine Farbdifferenz zwischen dem Farbton des Lichts von einer Lichtquelle und dem gemittelten Farbton des von dem Kombinierer reflektierten Lichts minimiert, und zwar wenn es mittels einer Änderung des Winkels oder der Summe der Quadrate der Farbunterschiede zwischen der Farbe eines von dem Licht von der Lichtquelle beobachtet wird, wenn es von dem Kombinierer durch Änderung des Winkels und des Farbtons des reflektierten Lichts beobachtet wird.

US 6,262,841 B1 offenbart eine Vorrichtung zum Projizieren eines reellen Bildes im Raum (im Gegensatz zu einem "echten" Bild im Gegensatz zu einem "virtuellen" Bild) und zum Eliminieren unerwünschter Phantombilder, und zwar indem sie eine Reihe von Linearpolarisatoren, Lambda-Viertel-Plättchen, Reflektor-/Spiegelelementen, Louverfolien und optischen Linsen in Kombination mit einem Dual Brightness Enhancement Film (DBEF) in Ausrichtung mit einem Ziel bereitstellt, um ein reales Bild an einer vorbestimmten Stelle in Bezug auf einen Beobachter bereitzustellen.

Es ist die **Aufgabe** der vorliegenden Erfindung, die oben genannten Nachteile zu vermeiden und insbesondere eine Projektionseinheit für ein Head-Up-Display mit einer verbesserten Unterdrückung eines Nebenbildes anzugeben, welche insbesondere einfach und preiswert implementierbar ist.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch eine Projektionseinheit für ein Head-Up-Display, aufweisend eine Beleuchtungseinheit, mindestens ein der Beleuchtungseinheit nachgeschaltetes optisches Element und eine dem mindestens einen optischen Element nachgeschaltete bildgebende Einheit, wobei in dem Strahlengang zwischen dem mindestens einen optischen Element und einem Lichtaustrittsbereich ein Zirkular-Polarisationsfilter und ein dem Zirkular-Polarisationsfilter nachgeschaltetes lineares Polarisationsfilter angeordnet sind.

Diese Projektionseinheit weist den Vorteil auf, dass in sie einfallendes Sonnenlicht nicht wieder austritt und somit kein Nebenbild oder Phantombild mehr erzeugt wird. Diese Maßnahme ist mit einem geringen Aufwand und auf eine kompakte Weise implementierbar. Denn in die Projektionseinheit (entgegen der normalen Richtung des Strahlengangs) einfallendes Sonnenlicht, das typischerweise unpolarisiert ist, erreicht zuerst das lineare Polarisationsfilter und wird dort in einer ersten Polarisationsrichtung polarisiert. Das so in der ersten Polarisationsrichtung polarisierte Sonnenlicht läuft weiter (gegen den normalen Strahlengang) zu dem Zirkular-Polarisationsfilter und wird dort wieder zirkular polarisiert. Dieses zirkular polarisierte Licht wird zumindest teilweise an dem optischen Element reflektiert, wobei sich die Zirkulationsrichtung des Sonnenlichts bei der Reflexion umkehrt und also der reflektierte Anteil eine umgekehrte Zirkulationsrichtung aufweist. Der reflektierte Anteil durchläuft in nun normaler Strahlrichtung das lineare Polarisationsfilter und wird erneut linear polarisiert, allerdings aufgrund der umgekehrten Drehrichtung der Zirkulationspolarisation in einer zweiten Polarisationsrichtung, welche im Wesentlichen senkrecht zu der ersten Polarisationsrichtung steht. Das reflektierte Licht wird im Folgenden an dem ersten, linearen Polarisationsfilter absorbiert, da dieser die zweite Polarisationsrichtung nicht durchlässt. Diese Projektionseinheit ist zudem mit einem geringen Aufwand und auf eine kompakte Weise implementierbar.

Die bildgebende Einheit kann z.B. ein LCD-Display sein.

Die bildgebende Einheit kann eine reflektierende Einheit sein (bei der das von der Beleuchtungseinheit einfallende Licht mit der Bildinformation reflektiert wird, z.B. eine DLP-Einheit oder eine LCoS-Einheit) oder eine refraktive Einheit sein (z.B. ein durch die Beleuchtungseinheit hinterleuchtetes Display).

Der Strahlenaustrittsbereich kann auch als eine Lichtaustrittsfläche der Projektionseinheit bezeichnet werden. Diese kann z.B. eine lichtdurchlässige Abdeckung mit oder ohne optische Funktion sein.

Es ist eine weitere Ausgestaltung, dass das lineare Polarisationsfilter in die bildgebende Einheit integriert ist. Dies kann beispielsweise dadurch erreicht werden, dass eine Anzeigeeinheit bzw. ein Display, insbesondere hinterleuchtetes Display, mit einem solchen linearen Polarisationsfilter ausgerüstet ist. In diesem Fall kann die Maßnahme zur Unterdrückung des Nebenbilds in einem Vorsehen nur eines zusätzlichen Zirkular-Polarisationsfilters liegen, was eine besonders preiswerte und kompakte Maßnahme darstellt.

Es ist eine alternative Ausgestaltung, dass das lineare Polarisationsfilter zwischen dem Zirkular-Polarisationsfilter und der bildgebenden Einheit angeordnet ist. Diese Ausgestaltung deckt auf eine besonders kompakte Weise den Fall ab, dass die bildgebende Einheit kein Polarisationsfilter aufweist.

Es ist auch eine Ausgestaltung, dass das Zirkular-Polarisationsfilter ein λ/4-Verzögerungselement ist. Das λ/4-Verzögerungselement kann insbesondere ein λ/4-Plättchen sein.

Das Zirkular-Polarisationsfilter kann beispielsweise als eine kostengünstige doppelbrechende Folie ausgestaltet sein.

Es ist ferner eine Ausgestaltung, dass das Zirkular-Polarisationsfilter in dem Strahlengang verkippt ist. Dadurch kann eine Reflexion des einfallenden Sonnenlichts an dem Zirkular-Polarisationsfilter selbst und damit eine weitere Quelle für eine Erzeugung eines Nebenbilds unterdrückt werden. Auch die bildgebende Einheit, insbesondere in Form eines hinterleuchteten Displays, kann in dem Strahlengang zur Unterdrückung einer Reflexion verkippt sein. Es ist eine spezielle Ausgestaltung, dass das Display und das Zirkular-Polarisationsfilter dann um den gleiche Winkel verkippt sind und also in parallelen Ebenen liegen.

Die Aufgabe wird auch gelöst durch ein Verfahren zum Betreiben einer Projektionseinheit für ein Head-Up-Display, wobei die Projektionseinheit eine Beleuchtungseinheit, mindestens ein der Beleuchtungseinheit nachgeschaltetes optisches Element und eine dem mindestens einen optischen Element nachgeschaltete bildgebende Einheit aufweist, wobei
- in die Projektionseinheit eintretendes Sonnenlicht zunächst mittels eines ersten Polarisationsmittels in einer ersten Polarisationsrichtung linear polarisiert wird,
- das linear polarisierte Sonnenlicht dann mittels eines zweiten Polarisationsmittels zirkular polarisiert wird,
- das zirkular polarisierte Sonnenlicht folgend an dem optischen Element zumindest teilweise zurückgeworfen werden,
- das zurückgeworfene, zirkular polarisierte Sonnenlicht mittels des zweiten Polarisationsmittels in einer zweiten Polarisationsrichtung linear polarisiert wird, wobei die erste Polarisationsrichtung und die zweite Polarisationsrichtung im Wesentlichen senkrecht aufeinander stehen und
- das in der zweiten Polarisationsrichtung linear polarisierte, zurückgeworfene Licht mittels des ersten Polarisationsmittels absorbiert wird.

Das erste Polarisationsmittel kann beispielsweise eine bildgebende Einheit mit einem integrierten Polarisationsfilter oder ein separates Polarisationsfilter sein.

Das zweite Polarisationsmittel kann beispielsweise ein Viertelwellenelement sein.

In den folgenden Figuren wird die Erfindung anhand eines Ausführungsbeispiels schematisch genauer beschrieben. Dabei können zur Übersichtlichkeit gleiche oder gleichwirkende Elemente mit gleichen Bezugszeichen versehen sein.
- Fig.1: zeigt zur kurzen Erläuterung einer allgemeinen Arbeitsweise eine Prinzipskizze eines Head-Up-Displays mit einer herkömmlichen Projektionseinheit;
- Fig.2: zeigt eine Prinzipskizze eines Head-Up-Displays mit einer erfindungsgemäßen Projektionseinheit.

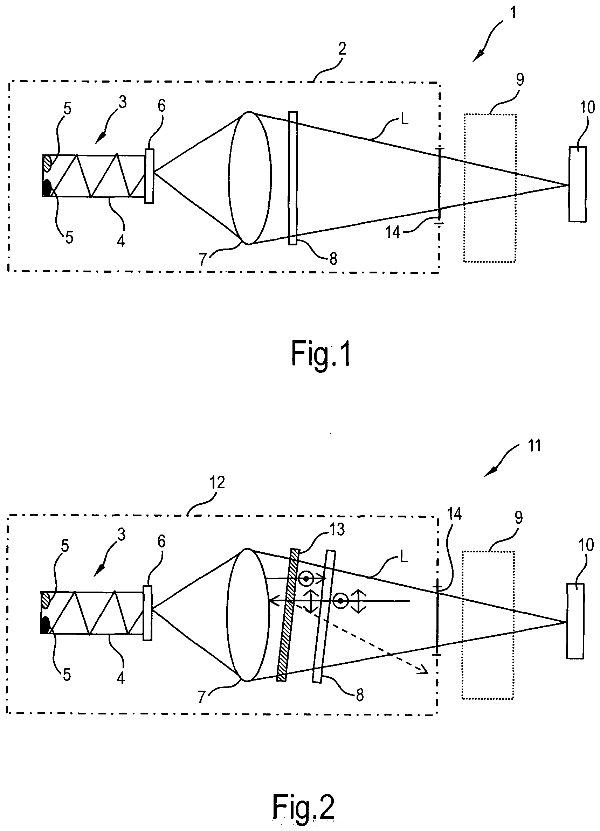

**Fig.1** zeigt ein Head-Up-Display 1 mit einer herkömmlichen Projektionseinheit 2. Die Projektionseinheit 2 weist eine Beleuchtungseinheit (hier: Hinterleuchtungseinheit) in Form eines Spiegelschachts 3 auf. In dem Spiegelschacht 3, welcher ein innenseitig verspiegeltes Gehäuse 4 aufweist, sind eine oder mehrere Leuchtdioden 5 gleicher oder unterschiedlicher Farbe angeordnet. Der Spiegelschacht 3 weist ferner eine durch einen lichtdurchlässigen Diffusor 6, z.B. ein Milchglas, abgedeckte Lichtaustrittsöffnung auf. Sind die Leuchtdioden 5 aktiviert, emittieren sie Licht, welches teilweise in dem verspiegelten Gehäuse 4 reflektiert wird, um eine homogene Lichtverteilung zu erreichen. Dazu ist auch der Diffusor 6 vorgesehen, welcher die Lichtverteilung weiter angleicht.

Das so weitgehend homogenisierte, von dem Spiegelschacht 3 ausgegebene Lichtbündel . L läuft von dem Spiegelschacht 3 zu einem optischen Element in Form eines Kondensors 7, der hier beispielhaft als eine Sammellinse ausgebildet ist. Dort wird das Lichtbündel L auf eine dem Kondensor 7 nachgeschaltete bildgebende Einheit in Form eines lichtdurchlässigen LCDs ("Liquid Crystal Display"; Flüssigkristallanzeige) aufgegeben. Das LCD ist hier als ein TFT-Display 8 ausgestaltet. Bei Durchgang des Lichtbündels L durch das TFT-Display 8 wird diesem eine Bildinformation aufgeprägt. Das TFT-Display 8 weist typischerweise ein lineares Polarisationsfilter auf.

Das Lichtbündel L wird weiter durch eine als ein Lichtaustrittsbereich der Projektionseinheit 2 dienende lichtdurchlässige Abdeckung 14 auf eine Frontscheibe 9, insbesondere eines Kraftfahrzeugs, geleitet. Die Abdeckung 14 kann selbst eine optische Eigenschaft aufweisen. Auf die Frontscheibe 9 projiziert kann das Lichtbündel L als ein virtuelles Bild von einem Nutzer betrachtet werden, dessen Augen sich in einem Abstand von der Frontscheibe 9 innerhalb eines als Eyebox 10 bezeichneten gedachten Volumens befinden. In Strahlrichtung vor und/oder hinter dem TFT-Display 8 können sich eine oder mehrere weitere Elemente der Projektionseinheit 2 befinden, z.B. mindestens ein weiteres optisches Element wie eine Umlenkoptik (Reflektor, Linse usw.). selbst eine optische Eigenschaft aufweisen kann.

Unter bestimmten Sonnenständen fällt Sonnenlicht durch die Abdeckung 14 in die Projektionseinheit 2 ein, und damit auch auf das TFT-Display 8. An den Stellen, an denen das TFT-Display 8 aufgrund des Anzeigeinhaltes transparent geschaltet ist, tritt dieses Sonnenlicht durch das TFT-Display 8 hindurch (wobei eine Abschwächung von ca. 95,3% auftritt) und wird von der Oberfläche des Kondensors 7 wieder in Richtung des TFT-Displays 8 zurückreflektiert. Aufgrund der enormen Helligkeit der Sonne besitzt dieses reflektierte Licht trotz der starken Abschwächung durch die geringe Transmissivität des TFT-Displays 8 und lediglich teilweiser Reflexion an der Oberfläche des Kondensors 7 eine ausreichende Helligkeit, um für den Fahrer ein zweites in der Eyebox 10 deutlich sichtbares und verschobenes Nebenbild zu erzeugen.

**Fig.2** zeigt eine Prinzipskizze eines Head-Up-Displays 11 mit einer erfindungsgemäßen Projektionseinheit 12. Zusätzlich zu der bekannten Projektionseinheit 2 weist die Projektionseinheit 12 nun zwischen dem Kondensor 7 und dem TFT-Display 8 einen Zirkular-Polarisator 13 in Form eines Viertelwellenplättchens, das als eine kostengünstige doppelbrechenden Folie ausgestaltet ist. Durch den Zirkular-Polarisator 13 können störende Reflexe des einfallenden Sonnenlichts von dem Kondensor 7 eliminiert werden

Denn in die Projektionseinheit 12 eintretendes Sonnenlicht wird zunächst mittels des TFT-Displays 8 in einer ersten Polarisationsrichtung linear polarisiert und läuft dann durch den Zirkular-Polarisator 13, wobei es zirkular polarisiert wird. Das zirkular polarisierte Sonnenlicht wird folgend an dem Kondensor 7 zumindest teilweise wieder in Richtung des TFT-Displays 8 zurückgeworfen und ändert dabei seine Zirkulationsrichtung. Das zurückgeworfene Sonnenlicht wird mittels des Zirkular-Polarisators 13 nochmals linear polarisiert, jedoch diesmal in einer zweiten Polarisationsrichtung. Die erste Polarisationsrichtung und die zweite Polarisationsrichtung stehen aufgrund der entgegengesetzten Zirkulationsrichtung des einfallenden Lichts im Wesentlichen senkrecht aufeinander. Folglich wird das in der zweiten Polarisationsrichtung linear polarisierte, zurückgeworfene Licht mittels des TFT-Displays 8 absorbiert. Ein Nebenbild wird eliminiert.

Eine Rückspiegelung des einfallenden Sonnenlichts an einer Oberfläche des Zirkular-Polarisators 13 und/oder des TFT-Displays 8 selbst wird dadurch vermieden, dass beide Elemente 8, 13 schräg in dem Lichtpfad angeordnet sind, hier in zueinander parallelen Ebenen.

Selbstverständlich ist die vorliegende Erfindung nicht auf das gezeigte Ausführungsbeispiel beschränkt.

So können auch reflektive bildgebende Einheiten verwendet werden.

Falls in die bildgebende Einheit kein lineares Polarisationsfilter integriert ist, kann dieses als ein separates Bauteil vorgesehen sein oder in ein anderes Bauteil integriert sein, z.B. in die Abdeckung der Projektionseinheit.

### Bezugszeichenliste

- 1: Head-Up-Display
- 2: Projektionseinheit
- 3: Spiegelschacht
- 4: innenseitig verspiegeltes Gehäuse
- 5: Leuchtdiode
- 6: Diffusor
- 7: Kondensor
- 8: TFT-Display
- 9: Frontscheibe
- 10: Eyebox
- 11: Head-Up-Display
- 12: Projektionseinheit
- 13: Zirkular-Polarisator
- 14: lichtdurchlässige Abdeckung
- L: Lichtbündel

## Patentansprüche

1. Projektionseinheit (12) für ein Head-Up-Display (11), aufweisend
- eine Beleuchtungseinheit (3,4,5,6) und
- eine der Beleuchtungseinheit (3,4,5,6) nachgeschaltete und durch diese hinterleuchtbare bildgebende Einheit (8), wobei
- in dem Strahlengang vor einem Lichtaustrittsbereich (14) der Projektionseinheit (12) ein Zirkular-Polarisationsfilter (13) und ein dem Zirkular-Polarisationsfilter (13) nachgeschaltetes lineares Polarisationsfilter angeordnet sind und
- das Zirkular-Polarisationsfilter (13) in dem Strahlengang verkippt angeordnet ist, **dadurch gekennzeichnet, dass**
- der Beleuchtungseinheit (3,4,5,6) und der bildgebenden Einheit (8) mindestens ein optisches Element (7) zwischengeschaltet ist,
- das Zirkular-Polarisationsfilter (13) und das lineare Polarisationsfilter in dem Strahlengang zwischen dem mindestens einen optischen Element (7) und dem Lichtaustrittsbereich (14) nachgeschaltet angeordnet sind und
- die bildgebende Einheit (8) in dem Strahlengang verkippt angeordnet ist.

2. Projektionseinheit (12) nach Anspruch 1, **dadurch gekennzeichnet, dass** das lineare Polarisationsfilter in die bildgebende Einheit (8) integriert ist.

3. Projektionseinheit nach Anspruch 1, **dadurch gekennzeichnet, dass** das lineare Polarisationsfilter zwischen dem Zirkular-Polarisationsfilter und der bildgebenden Einheit angeordnet ist.

4. Projektionseinheit (12) nach einem der vorhergehenden Ansprüche, **dadurch gekennzeichnet, dass** das Zirkular-Polarisationsfilter (13) ein λ/4-Verzögerungselement ist.

5. Projektionseinheit (12) nach einem der vorhergehenden Ansprüche, **dadurch gekennzeichnet, dass** das Zirkular-Polarisationsfilter (13) als eine doppelbrechende Folie ausgestaltet ist.

6. Projektionseinheit nach Anspruch 6, **dadurch gekennzeichnet, dass** die bildgebende Einheit (8) und das Zirkular-Polarisationsfilter (13) um den gleichen Winkel verkippt sind.

7. Projektionseinheit (12) nach einem der vorhergehenden Ansprüche, **dadurch gekennzeichnet, dass** in dem Strahlengang zwischen dem mindestens einen optischen Element (7) und dem Lichtaustrittsbereich (14) genau ein Zirkular-Polarisationsfilter (13) und genau ein TFT-Display (8) angeordnet sind.

8. Projektionseinheit (12) nach einem der vorhergehenden Ansprüche, **dadurch gekennzeichnet, dass** das mindestens eine optische Element (7) einen Kondenser aufweist.

9. Verfahren zum Betreiben einer Projektionseinheit (12) für ein Head-Up-Display (11), wobei die Projektionseinheit (12) eine Beleuchtungseinheit (3-6), mindestens ein der Beleuchtungseinheit (3-6) nachgeschaltetes optisches Element (7) und eine dem mindestens einen optischen Element (7) nachgeschaltete, hinterleuchtbare bildgebende Einheit (8) aufweist, **dadurch gekennzeichnet, dass**
- in die Projektionseinheit (12) eintretendes Sonnenlicht zunächst mittels eines ersten Polarisationsmittels in einer ersten Polarisationsrichtung linear polarisiert wird,
- das linear polarisierte Sonnenlicht dann mittels eines zweiten Polarisationsmittels (13) zirkular polarisiert wird,
- das zirkular polarisierte Sonnenlicht folgend an dem mindestens einen optischen Element (7) zumindest teilweise zurückgeworfen wird,
- das zurückgeworfene, zirkular polarisierte Sonnenlicht mittels des zweiten Polarisationsmittels (13) in einer zweiten Polarisationsrichtung linear polarisiert wird, wobei die erste Polarisationsrichtung und die zweite Polarisationsrichtung im Wesentlichen senkrecht aufeinander stehen,
- das in der zweiten Polarisationsrichtung linear polarisierte, zurückgeworfene Licht mittels des ersten Polarisationsmittels absorbiert wird und
- das Sonnenlicht bei seinem Durchgang in der Projektionseinheit (12) schräg auf die bildgebende Einheit (8) und auf das zweite Polarisationsmittel (13) auftrifft.

## Claims

1. A projection unit (12) for a head-up display (11), having
- an illumination unit (3, 4, 5, 6) and
- an imaging unit (8) which is connected downstream of the illumination unit (3, 4, 5, 6) and can be backlit by said illumination unit, wherein
- a circular polarisation filter (13) and a linear polarisation filter, connected downstream of the circular polarisation filter (13), are arranged in the beam path upstream of a light emission region (14) of the projection unit (12) and
- the circular polarisation filter (13) is arranged such that it is tilted in the beam path, **characterised in that**
- at least one optical element (7) is connected between the illumination unit (3, 4, 5, 6) and the imaging unit (8),
- the circular polarisation filter (13) and the linear polarisation filter are arranged such that they are connected downstream in the beam path between the at least one optical element (7) and the light emission region (14) and
- the imaging unit (8) is arranged such that it is tilted in the beam path.

2. A projection unit (12) according to claim 1, **characterised in that** the linear polarisation filter is integrated into the imaging unit (8).

3. A projection unit according to claim 1, **characterised in that** the linear polarisation filter is arranged between the circular polarisation filter and the imaging unit.

4. A projection unit (12) according to any one of the preceding claims, **characterised in that** the circular polarisation filter (13) is a λ/4 delay element.

5. A projection unit (12) according to any one of the preceding claims, **characterised in that** the circular polarisation filter (13) is configured as a double-refractive film.

6. A projection unit according to claim 6, **characterised in that** the imaging unit (8) and the circular polarisation filter (13) are tilted by the same angle.

7. A projection unit (12) according to any one of the preceding claims, **characterised in that** precisely one circular polarisation filter (13) and precisely one TFT display (8) are arranged in the beam path between the at least one optical element (7) and the light emission region (14).

8. A projection unit (12) according to any one of the preceding claims, **characterised in that** the at least one optical element (7) has a condenser.

9. A method for operating a projection unit (12) for a head-up display (11), wherein the projection unit (12) has an illumination unit (3-6), at least one optical element (7) connected downstream of the illumination unit (3-6), and an imaging unit (8) which can be backlit and is connected downstream of the at least one optical element (7), **characterised in that**
- sunlight entering the projection unit (12) is first of all polarised linearly in a first polarisation direction by a first polarising means,
- the linearly polarised sunlight is then polarised circularly by a second polarising means (13),
- the circularly polarised sunlight is subsequently at least partly reflected on the at least one optical element (7),
- the reflected, circularly polarised sunlight is polarised linearly in a second polarisation direction by the second polarising means (13), the first polarisation direction and the second polarisation direction being substantially orthogonal to each other,
- the reflected light which has been linearly polarised in the second polarisation direction is absorbed by the first polarising means and
- while passing through the projection unit (12), the sunlight falls obliquely onto the imaging unit (8) and onto the second polarising means (13).

## Revendications

1. Unité de projection (12) pour un affichage tête haute (11) comprenant :
- une unité d'éclairage (3, 4, 5, 6) et
- une unité de formation d'images (8) intercalée en arrière de l'unité d'éclairage (3, 4, 5, 6) et pouvant être rétro-éclairée par celle-ci,
- dans le chemin optique du faisceau sont intercalés, en avant de la zone de sortie de la lumière (14) de l'unité de projection (12) un filtre polarisant circulaire (13) et un filtre polarisant linéaire intercalé en arrière du filtre polarisant circulaire (13), et
- le filtre polarisant circulaire (13) est basculé dans le chemin optique du faisceau,
**caractérisée en ce que**
- entre l'unité d'éclairage (3, 4, 5, 6) et l'unité de formation d'images (8) est intercalé au moins un élément optique (7),
- le filtre polarisant circulaire (13) et le filtre polarisant linéaire sont successivement intercalés dans le chemin optique du faisceau entre l'élément optique (7) et la zone de sortie de la lumière (14), et
- l'unité de formation d'images (8) est basculée dans le chemin optique du faisceau.

2. Unité de projection (12) conforme à la revendication 1,
**caractérisée en ce que**
le filtre de polarisant linéaire est intégré dans l'unité de formation d'images (8).

3. Unité de projection (12) conforme à la revendication 1,
**caractérisée en ce que**
le filtre de polarisant linéaire est intercalé entre le filtre polarisant circulaire et l'unité de formation d'images.

4. Unité de projection (12) conforme à l'une des revendications précédentes,
**caractérisée en ce que**
le filtre polarisant circulaire (13) est un élément à retard λ/4.

5. Unité de projection (12) conforme à l'une des revendications précédentes,
**caractérisée en ce que**
le filtre de polarisant circulaire (13) est réalisé sous la forme d'un film biréfringent.

6. Unité de projection (12) conforme à la revendication 5,
**caractérisée en ce que**
l'unité de formation d'images (8) et le filtre polarisant circulaire (13) sont basculés du même angle.

7. Unité de projection (12) conforme à l'une des revendications précédentes,
**caractérisée en ce que**
dans le chemin optique du faisceau, entre l'élément optique (7) et la zone de sortie de la lumière (14), ne sont intercalés qu'un seul filtre polarisant circulaire (13) et qu'un seul affichage TFT (8).

8. Unité de projection (12) conforme à l'une des revendications précédentes,
**caractérisée en ce que**
l'élément optique (7) comporte un condenseur.

9. Procédé permettant le fonctionnement d'une unité de projection (12) destinée à un affichage tête haute (11) selon lequel l'unité de projection (12) comprend une unité d'éclairage (3-6), au moins un élément optique (7) intercalé en arrière de l'unité d'éclairage (3-6) et une unité de formation d'images (8) pouvant être rétro-éclairée intercalée en arrière de l'élément optique (7),
**caractérisé en ce que**
- la lumière solaire entrant dans l'unité de projection (12) est tout d'abord polarisée linéairement par des premiers moyens de polarisation dans une première direction de polarisation,
- la lumière solaire polarisée linéairement est ensuite polarisée circulairement par des seconds moyens de polarisation (13),
- la lumière solaire polarisée circulairement est ensuite renvoyée au moins partiellement sur l'élément optique (7),
- la lumière solaire polarisée circulairement renvoyée est polarisée linéairement par les seconds moyens de polarisation (13) dans une seconde direction de polarisation, la première direction de polarisation et la seconde direction de polarisation étant essentiellement perpendiculaires,
- la lumière renvoyée polarisée linéairement dans la seconde direction de polarisation est absorbée par les premiers moyens de polarisation, et
- lors de son passage dans l'unité de projection (12) la lumière solaire vient frapper obliquement l'unité de formation d'images (8) et les seconds moyens de polarisation (13).
